# EUROPÄISCHE PATENTANMELDUNG

(11) **EP 4 570 059 A1**
(43) Veröffentlichungstag der Anmeldung: **18.06.2025**
(21) Anmeldenummer: 24208900.1
(22) Anmeldetag: 25.10.2024
(51) Int. Cl.: A01F 15/07, A01F 21/00, A01D 75/18

(54) **BALLENWICKELVORRICHTUNG**

(30) Priorität: 14.12.2023 DE 102023135243
(71) Anmelder: Maschinenfabrik Bernard Krone GmbH & Co. KG, 48480 Spelle (DE)
(72) Erfinder: Borchers, Falko, 49076 Osnabrück (DE); Wullkotte, Niklas, 49811 Lingen (DE)

(57) **Zusammenfassung**

Die vorliegende Erfindung betrifft eine Ballenwickelvorrichtung (1) zum Umwickeln eines Erntegutballens (2) mit einem Wickelmaterial (41), wobei diese einen Rahmen (11) aufweist, mindestens eine um eine Wickelachse (W) in eine Rotationsrichtung relativ zum Rahmen rotierbare Wickeleinheit (4) zur Abgabe des Wickelmaterials sowie mindestens eine der Wickeleinheit in Rotationsrichtung vorauseilende Schalteinheit (5), die zur Erfassung eines Hindernisses vorgesehen ist, sowie eine Halteeinrichtung (6), die dazu eingerichtet ist, die Schalteinheit in einer Grundposition zu halten, wobei die Schalteinheit durch Überwinden einer Rückhaltewirkung der Halteeinrichtung relativ zur Wickeleinheit von der Grundposition in eine Auslöseposition auslenkbar ist, wodurch eine Sicherheitsmaßnahme der Ballenwickelvorrichtung auslösbar ist. Um eine erhöhte Zuverlässigkeit als auch Sicherheit beim Wickeln von Erntegutballen zu bieten, ist erfindungsgemäß vorgesehen, dass die Rückhaltewirkung durch Einsatz eines Elektromagneten (61) beeinflussbar ist, und/oder die Ballenwickelvorrichtung eine Stelleinrichtung aufweist, welche die Rückhaltewirkung in Abhängigkeit von einem Bewegungszustand des Rahmens relativ zu einem Untergrund automatisch einstellt.

## Beschreibung

Die vorliegende Erfindung betrifft eine Ballenwickelvorrichtung nach dem Oberbegriff des Patentanspruchs 1 sowie ein Verfahren nach dem Oberbegriff des Patentanspruchs 15.

Ballenwickelvorrichtungen werden dazu eingesetzt, Ballen aus Erntegut wie Gras, Stroh, Heu, Mais oder dgl. mit einem Wickelmaterial zu umwickeln. Entsprechend einem im Stand der Technik bekannten Funktionsprinzip weist die Ballenwickelvorrichtung eine Wickeleinheit auf, die um eine Wickelachse rotierend antreibbar ist und in einer umlaufend um den Erntegutballen geführten Rotationsbewegung das Wickelmaterial auf den Erntegutballen aufbringt. Eine der Wickeleinheit vorauseilende Schalteinheit dient dazu, Verletzungen von Mensch und Tier und/oder Beschädigungen am Wickelarm und/oder der Ballenwickelvorrichtung zu vermeiden. Bei Kontakt mit einem Hindernis löst die Schalteinheit eine Sicherheitsmaßnahme aus, die dazu vorgesehen ist, die Wickeleinheit in ihrer Rotationsbewegung anzuhalten, bevor sie das Hindernis erreicht. Die Sicherheitsnorm DIN EN ISO 4254-14:2016 schlägt vor, dass eine Impulsenergie zum Auslösen der Schalteinheit einen Wert von 20 Joule nicht überschreiten darf. Die Norm legt diese Auslöseenergie für einen Standbetrieb fest. In der Praxis hat sich jedoch gezeigt, dass es bei der vorgeschlagenen Auslöseenergie von 20 Joule während eines Fahrbetriebs zu Fehlauslösungen kommen kann. Durch die Fehlauslösungen kommt es oftmals zu unerwünschten Unterbrechungen des Wickelvorgangs während des Feldbetriebs.

Aufgabe der Erfindung ist, eine Ballenwickelvorrichtung bereitzustellen, die sowohl eine erhöhte Zuverlässigkeit als auch Sicherheit beim Wickeln von Erntegutballen bietet.

Die Aufgabe wird gelöst mit einer Ballenwickelvorrichtung mit den Merkmalen des unabhängigen Patentanspruchs 1, mit einer Ballenwickelvorrichtung mit den Merkmalen des unabhängigen Patentanspruchs 8, sowie mit einem Verfahren mit den Merkmalen des unabhängigen Patentanspruchs 15. Vorteilhafte Ausführungsformen sind den abhängigen Ansprüchen entnehmbar.

Dafür wird eine Ballenwickelvorrichtung zum Umwickeln eines Erntegutballens mit einem Wickelmaterial bereitgestellt. Die Ballenwickelvorrichtung weist einen Rahmen auf, mindestens eine um eine Wickelachse in eine Rotationsrichtung relativ zum Rahmen rotierend antreibbare Wickeleinheit zur Abgabe des Wickelmaterials an den Erntegutballen, mindestens eine der Wickeleinheit in Rotationsrichtung vorauseilende Schalteinheit, die zur Erfassung eines Hindernisses vorgesehen ist, sowie eine Halteeinrichtung, die dazu eingerichtet ist, die Schalteinheit in einer Grundposition zu halten, wobei die Schalteinheit durch Überwinden einer Rückhaltewirkung der Halteeinrichtung relativ zur Wickeleinheit von der Grundposition in eine Auslöseposition auslenkbar ist, wodurch eine Sicherheitsmaßnahme der Ballenwickelvorrichtung auslösbar ist.

Die Ballenwickelvorrichtung dient dazu, Erntegutballen mit Wickelmaterial zu umwickeln. Es sind dabei verschiedene Ausgestaltungen der Ballenwickelvorrichtung verwendbar. In einer Ausgestaltung ist die Ballenwickelvorrichtung als selbstfahrende Arbeitsmaschine mit eigenem Fahrantrieb und eigenem Fahrwerk ausgebildet. In einer anderen Ausgestaltung ist die Ballenwickelvorrichtung als gezogene Arbeitsmaschine ausgebildet, welche keinen eigenen Fahrantrieb aufweist und stattdessen von einem Zugfahrzeug wie einem Schlepper gezogen wird. Dies schließt zum Beispiel auch die Option ein, dass die Ballenwickelvorrichtung an eine Ballenpresse angehängt ist, die ihrerseits vom Schlepper gezogen wird. In einer wiederum anderen Ausgestaltung ist die Ballenwickelvorrichtung als ein Anbaugerät ausgebildet, das kein eigenes Fahrwerk aufweist und an ein Fahrzeug anbaubar ist, um von diesem getragen zu werden. Beispielsweise kann das Anbaugerät front- und/oder heckseitig an ein Zugfahrzeug angebaut werden, insbesondere mittels einer Dreipunkthydraulik. Es besteht auch die Möglichkeit eines Anbaus an andere Fahrzeuge, wie einen Frontlader, einen Teleskoplader oder einen Bagger, um nur einige Beispiele zu nennen.

Die Erfindung ist dabei ferner nicht auf Maschinentypen eingeschränkt, die ausschließlich zum Umwickeln von Erntegutballen vorgesehen sind, sondern sie erstreckt sich zudem auf landwirtschaftliche Arbeitsmaschinen, in die eine solche Ballenwickelvorrichtung integriert ist. So kann die Ballenwickelvorrichtung Bestandteil einer Ballenpresse sein, beispielsweise einer sogenannten Press-Wickel-Kombination, welche zumindest eine Presseinrichtung zum Pressen des Erntegutballens und eine Übergabeeinrichtung zur Übergabe des Erntegutballens von der Presseinrichtung an die Ballenwickelvorrichtung aufweist. Die Presseinrichtung und die Ballenwickelvorrichtung können in dieser Ausführungsform über einen gemeinsamen Rahmen verbunden sein. Auch ist es denkbar, dass der Erntegutballen am gleichen Ort umwickelt wird, an dem er auch gepresst wurde, so dass die Presseinrichtung und die Ballenwickelvorrichtung räumlich nicht klar voneinander getrennt sind, und eine Übergabeeinrichtung entfällt.

Das Umwickeln des Erntegutballens kann aus verschiedenen Gründen sinnvoll sein. So kann das Umwickeln dazu dienen, den Erntegutballen vor Witterungseinflüssen wie Regen zu schützen. Ebenfalls kann das Umwickeln einer Formwahrung des Erntegutballens dienen, indem durch die Umwicklung ein Zerfallen des Erntegutballens verhindert wird. Des Weiteren kann die Umwicklung dazu dienen, Gärprozesse im Erntegutballen zu fördern, wie etwa bei der Herstellung von Silage. Je nach Verwendungszweck können sich unterschiedliche Anforderungen an das Wickelmaterial ergeben. Entsprechend kann das Wickelmaterial unterschiedliche Eigenschaften und/oder Ausprägungen aufweisen. Bevorzugt ist das Wickelmaterial bahnförmig ausgebildet, beispielsweise in der Art einer Folie, eines Tuches und/oder eines Netzes. Das Wickelmaterial kann aber auch fadenförmig als Garn und/oder Draht oder bandförmig zum Beispiel als Kunststoffband ausgebildet sein.

Der Rahmen ist als eine tragende Struktur anzusehen, welche verschiedene Einrichtungen und/oder Baugruppen der Ballenwickelvorrichtung tragen und/oder zusammenhalten kann. Sofern die Ballenwickelvorrichtung ein Fahrwerk aufweist, kann dieses am Rahmen aufgehängt sein. Der Rahmen ist vorteilhaft in sich starr ausgebildet. Er kann einstückig ausgebildet sein oder eine Mehrzahl von Bauteilen aufweisen, die beispielsweise durch Verschweißen und/oder Verschrauben zusammengefügt sein können. Es versteht sich, dass eine genaue Zusammensetzung und Konstruktion des Rahmens je nach Ausführungsform der Ballenwickelvorrichtung variieren kann. Die Wickeleinheit ist relativ zum Rahmen rotierend antreibbar. Insbesondere kann sie direkt oder indirekt vom Rahmen getragen sein. In diesem Fall werden die Gewichtskraft der Wickeleinheit sowie hieraus resultierende Drehmomente vom Rahmen aufgenommen.

Die Rotationsbewegung der Wickeleinheit dient dazu, den Erntegutballen mit dem Wickelmaterial zu umwickeln. Sie ist durch die Wickelachse definiert. Die Wickelachse kann insbesondere derart angeordnet sein, dass sie bei aufgenommenem Erntegutballen einen mittleren Bereich desselben durchläuft. Wenn auch andere Ausrichtungen möglich sind, so erstreckt sich jedoch die Wickelachse bevorzugt in einer in etwa vertikalen Richtung, das heißt sie verläuft parallel zu einer Hochachse der Ballenwickelvorrichtung oder in einem Winkel von höchstens 30° zu dieser. Die Rotationsbewegung der Wickeleinheit dient dazu, das Wickelmaterial an den Erntegutballen abzugeben. Dabei wird das Wickelmaterial während der Rotationsbewegung zumindest bereichsweise umlaufend um den Erntegutballen geführt und auf diesen aufgebracht.

Das Wickelmaterial kann an einer von der Wickeleinheit gesonderten Lagerstelle angeordnet sein, von welcher es durch die Wickeleinheit abgezogen werden kann. Bevorzugt ist es jedoch, dass die Wickeleinheit dazu ausgebildet ist, das Wickelmaterial zu tragen. In dieser Ausführungsform ist das Wickelmaterial üblicherweise bezüglich der Hochachse auf einer Höhe an der Wickeleinheit angeordnet, die wenigstens teilweise einer Position des Erntegutballens entspricht.

Das Wickelmaterial kann je nach Ausgestaltung auf verschiedene Weise bereitgestellt werden. Bevorzugt ist es, dass das Wickelmaterial aufgerollt auf einer Rolle bereitgestellt wird. Durch die Rotationsbewegung der Wickeleinheit gegenüber dem Erntegutballen, an welchem ein Teilabschnitt des Wickelmaterials bereits anhaftet, wird das Wickelmaterial abgezogen und/oder abgerollt. Die Wickeleinheit kann zusätzlich mit einem Vorstrecksystem ausgestattet sein, das dazu vorgesehen ist, das Wickelmaterial beim Abziehen und/oder Abrollen mit einer Vorspannung zu beaufschlagen. Hierdurch kann das Wickelmaterial gedehnt werden, wodurch zum Beispiel ein auf dem Wickelmaterial aufgebrachter Kleber aktiviert werden kann. Auch kann durch die Vorstreckung ein gleichbleibender Anpressdruck des Wickelmaterials auf den Erntegutballen erreicht werden.

Bei dem zu umwickelnden Erntegutballen handelt es sich um einen durch eine geeignete Presseinrichtung gepressten Ballen aus Erntegut. Die Erfindung ist prinzipiell nicht auf eine Größe und/oder Form des Erntegutballens eingeschränkt. Demnach kann es sich insbesondere um einen zylindrischen Rundballen, aber auch beispielsweise um einen quaderförmigen Erntegutballen handeln.

Üblicherweise weist die Ballenwickelvorrichtung einen Wickeltisch auf, der dazu vorgesehen ist, den Erntegutballen zumindest während des Wickelvorgangs aufzunehmen. Die Ballenwickelvorrichtung kann eine Hebeeinrichtung aufweisen, die es ermöglicht, den Erntegutballen etwa vom Boden aufzuheben und an den Wickeltisch zu übergeben. Es ist auch denkbar, dass der Erntegutballen vom Boden unmittelbar mit dem Wickeltisch aufgenommen wird. Im Falle einer Press-Wickel-Kombination kann der Erntegutballen auch durch die oben genannte Übergabeeinrichtung an den Wickeltisch übergeben werden. Der Wickeltisch kann zumindest ein Antriebsmittel aufweisen, um den Erntegutballen zumindest während des Wickelvorgangs in Bewegung zu versetzen. Insbesondere kann das Antriebsmittel dazu vorgesehen sein, den Erntegutballen um eine von der Wickelachse abweichende Achse in Drehung zu versetzen. Bei der Achse, um die der Erntegutballen verdrehbar ist, kann es sich um eine Symmetrieachse des Erntegutballens handeln. Dadurch kann die Wickeleinheit vorteilhaft den Erntegutballen mit unterschiedlich ausgerichteten Bahnen des Wickelmaterials umwickeln. Dieses Antriebsmittel kann beispielsweise aus einer Rolle und/oder einem Band gebildet sein, die während des Wickelvorgangs in Kontakt mit dem Erntegutballen sind, um diesen in Drehung zu versetzen.

Grundsätzlich kann zwischen zwei Wickelvorgängen unterschieden werden. So können das Abziehen des Wickelmaterials und die Abgabe an den Erntegutballen einerseits mittels einer Rotationsbewegung des Erntegutballens und andererseits mittels einer Rotationsbewegung der Wickeleinheit um die Wickelachse mit optionaler zusätzlicher Rotationsbewegung des Erntegutballens durchführbar sein. Die gattungsgemäße Ballenwickelvorrichtung ist insbesondere zur Durchführung des letzteren der beiden genannten Wickelvorgänge eingerichtet.

Die Schalteinheit dient dazu, ein Hindernis, das sich in einem Bewegungsbereich der Wickeleinheit befindet, zu erfassen, und zwar insbesondere bevor eine Kollision mit der Wickeleinheit erfolgt. Daher ist sie der Wickeleinheit vorauseilend an der Ballenwickelvorrichtung angeordnet. Bei dem Hindernis kann es sich um eine Person oder ein Tier handeln, die in den Bewegungsbereich der Wickeleinheit gelangen. Es kann sich ferner auch um ein Objekt handeln, durch das Kollisionsgefahr besteht. Es kann sich auch beispielsweise um den Erntegutballen handeln, wenn dieser sich unbeabsichtigt während des Wickelvorgangs vom Wickeltisch entfernt.

Die Schalteinheit ist von der Grundposition in die Auslöseposition auslenkbar, wobei die Auslenkung relativ zur Wickeleinheit erfolgt. Die Grund- und Auslöseposition sind daher als Positionen anzusehen, die die Schalteinheit relativ zur Wickeleinheit einnehmen kann. Zur Auslenkung ist die Schalteinheit dreh- und/oder verschiebbar gelagert und/oder nachgiebig ausgebildet. Diese Eigenschaft der Schalteinheit dient dazu, das Hindernis sowie die Schalteinheit selbst bei Kontakt durch nachgiebiges Zurückweichen zu schonen. Die Auslenkbarkeit der Schalteinheit wird zudem auch dazu genutzt, die Sicherheitsmaßnahme auszulösen. Durch die Sicherheitsmaßnahme sollen Verletzungs- und/oder Beschädigungsrisiken aufgrund einer Kollision mit der Wickeleinheit vermieden und/oder zumindest eingegrenzt werden.

Die Halteeinrichtung dient dazu, die Schalteinheit in der Grundposition zu halten, solange keine nennenswerten äußeren Kräfte oder Drehmomente auf die Schalteinheit wirken. Diese Haltefunktion wird zumindest durch die Ausübung der Rückhaltewirkung auf die Schalteinheit ausgeführt, da die Auslenkung aus der Grundposition heraus entgegen der Rückhaltewirkung der Halteeinrichtung erfolgt. Die Rückhaltewirkung kann in diesem Zusammenhang auch als ein Widerstand aufgefasst werden, der der Auslenkung entgegensteht. Beispielsweise kann die Rückhaltewirkung zumindest teilweise auf einem Widerstand gegenüber einer elastischen Verformung beruhen. Sie kann aber auch ein Widerstand gegenüber einer translatorischen und/oder rotatorischen Bewegung der Schalteinheit sein. Die Rückhaltewirkung beruht in aller Regel zumindest auf einer Rückhaltekraft und/oder einem Rückhaltemoment. Bei der Rückhaltekraft und/oder dem Rückhaltemoment handelt es sich insbesondere um eine Summe von Kräften und/oder Drehmomenten, die von der Halteeinrichtung auf die Schalteinheit ausgeübt werden. Sofern die Auslenkung der Schalteinheit durch elastische Verformung realisiert ist, beruht die Rückhaltewirkung zumindest auch auf einer elastischen Rückstellkraft und/oder einem elastischen Rückstellmoment.

Die Rückhaltewirkung wirkt zumindest bei der Auslenkung von der Grundposition in die Auslöseposition auf die Schalteinheit ein. Insbesondere kann die Rückhaltewirkung in der Grundposition, in der Auslöseposition und/oder in einer beliebigen Position zwischen der Grundposition und der Auslöseposition auf die Schalteinheit einwirken. Ebenso kann die Rückhaltewirkung auch erst während der Auslenkung in die Auslöseposition wirken. Sie kann ferner nur initial, das heißt für einen nahezu infinitesimal kleinen Auslenkungsweg und/oder für eine nahezu infinitesimal kurze Auslenkungszeit, während der Auslenkung wirken. Ebenso kann sie auch nur abschnittsweise oder durchgehend während der Auslenkung auf die Schalteinheit einwirken.

Die Ballenwickelvorrichtung zeichnet sich dadurch aus, dass die Halteeinrichtung wenigstens einen Elektromagneten aufweist, der dazu ausgebildet ist, die Rückhaltewirkung zumindest zu beeinflussen.

Der Elektromagnet ist dazu ausgebildet, ein Magnetfeld zu erzeugen. Eine magnetische Kraftwirkung des Magnetfeldes erlaubt es, die Rückhaltewirkung zu beeinflussen. Hierfür muss lediglich ein Bauteil dazu ausgebildet sein, auf das Magnetfeld zu reagieren. Vorteilhaft kann ein solches Bauteil wenigstens teilweise ferromagnetisch ausgebildet sein. Insbesondere kann sich der Abstand des Bauteils vom Elektromagneten in der Auslöseposition vom Abstand in der Grundposition unterscheiden. Der Elektromagnet kann beispielsweise stationär bezüglich der Wickeleinheit angeordnet sein, während das genannte Bauteil stationär bezüglich der Schalteinheit angeordnet ist und zum Beispiel wenigstens einen Teil der Schalteinheit bildet. Umgekehrt könnte aber auch das Bauteil stationär bezüglich der Wickeleinheit angeordnet sein und der Elektromagnet könnte stationär bezüglich der Schalteinheit angeordnet sein. Es sind auch andere Möglichkeiten gegeben. Zum Beispiel kann der Elektromagnet zwei ferromagnetische Bauteile magnetisieren, so dass diese einander anziehen und so zur Rückhaltewirkung beitragen.

Die Rückhaltewirkung kann durch den Elektromagneten auf verschiedene Art und Weise beeinflussbar sein. So kann vorgesehen sein, dass der Elektromagnet die Rückhaltewirkung über einen längeren Zeitraum konstant beeinflusst. Entsprechend kann der Elektromagnet als quasi-permanenter Magnet genutzt werden. Die Nutzung des Elektromagneten erfolgt jedoch bevorzugt auf dynamische Weise. Das heißt das erzeugte Magnetfeld wird über eine Betriebsdauer hinweg angepasst. Die Einstellbarkeit des Magnetfeldes kann zur Einstellung der Rückhaltewirkung genutzt werden. Im Allgemeinen ist das vom Elektromagnet erzeuge Magnetfeld, insbesondere eine Stärke des Magnetfeldes, von einem durch den Elektromagneten fließenden elektrischen Strom abhängig. Eine Wirkung des Elektromagneten ist daher durch eine Veränderung des elektrischen Stromes veränderbar.

Die Rückhaltewirkung einzustellen kann aus mehreren Gründen sinnvoll oder vorteilhaft sein. Dies gilt insbesondere für wechselnde Betriebs- und/oder Umgebungsbedingungen der Ballenwickelvorrichtung. Die Rückhaltewirkung kann demnach anhand verschiedener Bedingungen und/oder Ziele einstellbar, oder gar optimierbar sein. So kann zum einen die Rückhaltewirkung im Hinblick auf eine möglichst hohe Sicherheit während des Wickelvorgangs eingestellt werden. Realisierbar ist dies beispielsweise durch eine empfindliche und/oder schnelle Auslösung der Schalteinheit. Die Empfindlichkeit der Auslösung hängt von der Rückhaltewirkung ab. Je niedriger die Rückhaltewirkung ist, desto höher ist die Empfindlichkeit der Schalteinheit. In Folge kann die Empfindlichkeit durch Einstellung der Rückhaltewirkung angepasst werden. Jedoch können bei einer zu hohen Empfindlichkeit vermehrt Fehlauslösungen auftreten. Fehlauslösungen sind in diesem Zusammenhang als unbeabsichtigte Auslösungen der Schalteinheit zu verstehen, das heißt insbesondere Auslösungen ohne Hinderniskontakt. In einer vorteilhaften Ausführung wird die Rückhaltewirkung für den schonenden Hinderniskontakt ausreichend niedrig eingestellt und gleichzeitig ausreichend hoch, um Fehlauslösungen sicher zu vermeiden.

Der Elektromagnet kann wahlweise zu einer Erhöhung und/oder Reduzierung der Rückhaltewirkung ausgebildet sein. Es kann ferner vorgesehen sein, dass die Rückhaltewirkung ausschließlich durch den Elektromagneten aufgebracht wird. In diesem Fall kann die Rückhaltewirkung durch Ausschalten des Elektromagneten auch gänzlich entfallen. Ferner kann es vorgesehen sein, eine Mehrzahl solcher Elektromagneten zur Beeinflussung der Rückhaltewirkung zu verwenden.

Die Verwendung des Elektromagneten bietet im Allgemeinen noch viele weitere Vorteile. Insbesondere im Vergleich zu einer motorischen Lösung sind eine Anzahl beweglicher Teile, ein benötigter Bauraum sowie ein Wartungsaufwand sehr gering. Zudem weist der Elektromagnet eine hohe Lebensdauer und geringe Störungsempfindlichkeit auf, sodass die Haltefunktion der Halteeinrichtung zuverlässig gewährleistet ist.

In einer bevorzugten Ausgestaltung ist der Elektromagnet zur Erzeugung einer auf die Schalteinheit relativ zur Wickeleinheit wirkenden Elektromagnetkraft ausgebildet, die veränderbar ist, um die Rückhaltewirkung zumindest zu beeinflussen. Je nach Kraftrichtung der Elektromagnetkraft, kann diese dazu beitragen, die Rückhaltewirkung zu erhöhen oder zu verringern. Das heißt die Elektromagnetkraft kann negativ oder positiv zur Rückhaltewirkung beitragen. Ferner ist es möglich, dass die Rückhaltewirkung ausschließlich auf der Elektromagnetkraft beruht. Die Elektromagnetkraft wirkt auf die Schalteinheit relativ zur Wickeleinheit. Sie kann beispielsweise eine Anziehung der Schalteinheit zur Wickeleinheit oder eine Abstoßung von der Wickeleinheit erzeugen. Aufgrund des Prinzips "actio=reactio" erzeugt der Elektromagnet streng genommen ein Kräftepaar, wobei eine Kraft auf die Schalteinheit wirkt und eine gleichgroße entgegengesetzte Kraft direkt oder indirekt auf die Wickeleinheit. Man kann auch sagen, dass die Elektromagnetkraft zwischen der Schalteinheit und der Wickeleinheit wirkt. Dabei kann der Elektromagnet wenigstens indirekt mit der Wickeleinheit oder aber mit der Schalteinheit verbunden sein. Er kann auch in eine der Einheiten integriert sein. Die Elektromagnetkraft kann auf einer magnetischen Wechselwirkung mit der jeweils anderen Einheit oder mit einem Bauteil, das mit dieser verbunden ist, beruhen. Die Elektromagnetkraft ist veränderbar, wodurch auch die Rückhaltewirkung beeinflussbar und veränderbar ist. Genauer gesagt, ist die Elektromagnetkraft bei gleichbleibender Position der Schalteinheit veränderbar. Insbesondere kann sie veränderbar sein, während die Schalteinheit in der Grundposition ist. Je nach konstruktiver Ausgestaltung kann die Elektromagnetkraft anziehend oder abstoßend auf die Schalteinheit einwirken. Ebenso kann sie anziehend oder abstoßend auf die Wickeleinheit einwirken.

Die Elektromagnetkraft kann durch Einschalten des Elektromagneten zuschaltbar sein. In dieser Ausführungsform übt der Elektromagnet die Elektromagnetkraft im eingeschalteten Zustand aus, während er im ausgeschalteten Zustand keine Kraft ausübt. Zusätzlich oder alternativ zum reinen Ein- und/oder Ausschalten ist auch eine Einstellung der Elektromagnetkraft möglich, sodass unterschiedliche, von Null verschiedene Werte der Elektromagnetkraft einstellbar sind. Die Elektromagnetkraft kann stufenlos und/oder stufenweise einstellbar sein. Hierfür muss lediglich der Stromfluss durch den Elektromagneten angepasst werden. Durch eine Umpolung des Stromflusses ist es ferner auch möglich, die Kraftrichtung der Elektromagnetkraft zu verändern. Demnach kann die Elektromagnetkraft des Elektromagneten wahlweise anziehend oder abstoßend zwischen Wickeleinheit und Schalteinheit wirken, um die Rückhaltewirkung zu beeinflussen. Damit die Elektromagnetkraft abstoßend wirkt, muss der Elektromagnet mit einem weiteren Magneten zusammenwirken, wobei die beiden Magnete einander gleichnamige Pole zuwenden.

Die Beeinflussung der Rückhaltewirkung durch den Elektromagneten kann wie bereits beschrieben prinzipiell durch eine anziehende oder abstoßende Wirkung erzielt werden. Dabei kann der Elektromagnet insbesondere dazu eingerichtet sein, anziehend und/oder abstoßend auf die Wickeleinheit oder die Schalteinheit einzuwirken.

Je nach Ausgestaltung sind verschiedene örtliche Anordnungen des Elektromagneten möglich. So kann In einer vorteilhaften Ausgestaltung der Elektromagnet an der Schalteinheit angeordnet sein. In dieser Ausführung kann er dazu eingerichtet sein, die Elektromagnetkraft auf die Wickeleinheit auszuüben. In einer ebenso vorteilhaften Ausführungsform kann der Elektromagnet an der Wickeleinheit angeordnet sein. In dieser Ausführungsform ist der Elektromagnet bevorzugt dazu ausgebildet, die Elektromagnetkraft auf die Schalteinheit auszuüben. Der Elektromagnet kann zudem auch auf ein Bauteil, das nicht von der Schalteinheit oder der Wickeleinheit umfasst ist, einwirken oder an diesem angeordnet sein. Es kann sich dabei insbesondere um ein Bauteil handeln, das starr oder flexibel mit der Schalteinheit oder der Wickeleinheit verbunden ist. Durch die Verbindung kann eine mechanische Kraftübertragung zwischen dem Bauteil und der Schalteinheit oder Wickeleinheit erfolgen, wodurch die Elektromagnetkraft auch auf diese Einheit wirkt.

Bevorzugt ist außerdem, dass die Halteeinrichtung zusätzlich zu wenigstens einem Elektromagneten ein Kraftmittel umfasst, das zur Erzeugung einer auf die Schalteinheit relativ zur Wickeleinheit wirkenden Zusatzkraft ausgebildet ist, wobei die Zusatzkraft die Rückhaltewirkung zumindest beeinflusst. Das Kraftmittel ist zusätzlich zu wenigstens einem Elektromagneten vorgesehen, was allerdings nicht ausschließt, dass es ebenfalls als zusätzlicher Elektromagnet ausgebildet ist. Die Elektromagnetkraft und die Zusatzkraft stellen insofern unterschiedliche Kräfte dar, wenngleich die Zusatzkraft ebenfalls auf einer magnetischen Wechselwirkung beruhen kann. Das Kraftmittel kann beispielsweise an der Wickeleinheit und/oder an der Schalteinheit angeordnet sein. Es kann einteilig oder mehrteilig ausgebildet sein. In letzterem Fall kann es teilweise an der Wickeleinheit und teilweise an der Schalteinheit angeordnet sein.

Je nach konstruktiver Ausgestaltung ist es bevorzugt, dass die Zusatzkraft des Kraftmittels wenigstens anteilig in Kraftrichtung der Elektromagnetkraft des Elektromagneten oder gegen die Kraftrichtung wirkend ausgerichtet ist. Entsprechend kann die Zusatzkraft dazu vorgesehen sein, die Wirkung des Elektromagneten zu unterstützen, indem sie in Kraftrichtung der Elektromagnetkraft wirkt, oder herabzusetzen, indem sie entgegen der Kraftrichtung der Elektromagnetkraft wirkt. Bei einer vorgesehenen Richtungsänderung der Elektromagnetkraft, durch Umpolung des Elektromagneten, kann die Zusatzkraft zeitweise in Kraftrichtung und zeitweise gegen die Kraftrichtung wirken.

Sowohl die Elektromagnetkraft als auch die Zusatzkraft können dazu vorgesehen sein, die Schalteinheit mit einem Drehmoment zu beaufschlagen. Die Rückhaltewirkung kann insbesondere ausschließlich auf dem von der Elektromagnetkraft und der Zusatzkraft eingeleiteten Drehmoment beruhen. Die Elektromagnetkraft und die Zusatzkraft können dabei ferner auch unterschiedliche Krafteinleitungspunkte aufweisen.

Es ist bevorzugt, dass der Einfluss des Kraftmittels zur Rückhaltewirkung unabhängig vom Einfluss des Elektromagneten ist. Insbesondere kann das Kraftmittel unabhängig von dem Elektromagneten arbeiten. Der Elektromagnet benötigt für den Betrieb einen Stromfluss, um die Elektromagnetkraft aufzubringen. Vorteilhaft kann selbst bei einem Wegfall der Stromversorgung des Elektromagneten die Rückhaltewirkung durch das Kraftmittel zumindest teilweise aufrechterhalten werden.

Es ist zudem bevorzugt, dass das Kraftmittel dazu ausgebildet ist, die Rückhaltewirkung unabhängig von einem Betriebszustand der Ballenwickelvorrichtung zu beeinflussen, und/oder dass das Kraftmittel als passives Kraftmittel ausgebildet ist. Passiv bedeutet in diesem Zusammenhang, dass es ohne eine, insbesondere dauerhafte, Energieversorgung betreibbar ist. Die Schalteinheit kann demnach unabhängig von aktuellen Betriebs- und/oder Umweltbedingungen mit der Zusatzkraft beaufschlagt sein. Dadurch bleibt die Einflussnahme des Kraftmittels zur Rückhaltewirkung zumindest während des Wickelvorgangs unverändert. Das bedeutet, dass im Falle eines positiven Beitrags des Kraftmittels zur Rückhaltewirkung diese selbst bei sich ändernden Betriebsbedingungen zumindest in dem durch die Zusatzkraft hervorgerufenen Maße dauerhaft vorhanden ist.

Verschiedene Ausgestaltungen des Kraftmittels sind im Rahmen der Erfindung verwendbar. Bevorzugt ist, dass das Kraftmittel wenigstens eine Feder, einen Magneten und/oder eine mechanische Verriegelung aufweist. Das Kraftmittel kann dabei insbesondere genau eine Feder, einen Magneten oder eine mechanische Verriegelung aufweisen. Zudem ist eine Kombination von Feder, Magnet und/oder mechanischer Verriegelung in beliebiger Anzahl möglich.

Die Feder kann dabei als Druck- oder als Zugfeder ausgebildet sein. Ebenso kann die Feder als Torsionsfeder ausgebildet sein. Die Zusatzkraft beruht in dieser Ausführungsform zumindest auf einer Federrückstellkraft und/oder einem Federrückstellmoment der Feder und dient der Beeinflussung der Rückhaltewirkung.

Der Magnet kann als zusätzlicher Elektromagnet ausgebildet sein. Vorzugsweise ist er aber als ein Permanentmagnet ausgebildet, sodass er unabhängig von einer Stromversorgung arbeitet. Die Rückhaltewirkung ist durch den Magneten durch Ausübung einer magnetischen Kraft auf die Schalteinheit beeinflussbar.

Bevorzugt weist die mechanische Verriegelung wenigstens zwei Einrastelemente auf, die dazu vorgesehen sind, sich durch Einrasten verriegelnd zu verbinden. Das Einrasten dient dazu, die Schalteinheit in der Grundposition zu halten. Eine Entriegelung der Einrastelemente erfolgt bei Auslenkung der Schalteinheit von der Grundposition in die Auslöseposition. Die Entriegelung erfolgt dabei entgegen einer Verriegelungskraft der Einrastelemente. In dieser Ausführungsform beruht die Zusatzkraft zumindest teilweise auf der Verriegelungskraft der mechanischen Verriegelung.

Feder, Magnet und/oder mechanische Verriegelung sind dazu vorgesehen, durch Ausübung der Zusatzkraft die Rückhaltewirkung zumindest zu beeinflussen. Im Falle einer Kombination und/oder Mehrzahl von Feder, Magnet und/oder mechanischer Verriegelung kann die Zusatzkraft auch als eine Summe der Kräfte der Feder, des Magneten und/oder der mechanischen Verriegelung angesehen werden. Bei allen vorstehend genannten Ausführungen ist das Kraftmittel in der Lage, die Rückhaltewirkung unabhängig vom Elektromagneten zumindest zu beeinflussen.

Gemäß einer vorteilhaften Ausgestaltung weist die Ballenwickelvorrichtung eine Stelleinrichtung auf, die dazu eingerichtet ist, die Rückhaltewirkung in Abhängigkeit von einem Bewegungszustand des Rahmens relativ zu einem Untergrund automatisch einzustellen. Insbesondere kann die Stelleinrichtung den Elektromagneten abhängig von dem Bewegungszustand ansteuern. Die automatische Einstellung kann hierbei das reine Ein- und/oder Ausschalten des Elektromagneten in Abhängigkeit vom Bewegungszustand umfassen. Zusätzlich oder alternativ kann durch die Stelleinrichtung eine automatische Einstellung der Stärke und/oder der Kraftrichtung der Elektromagnetkraft herbeigeführt werden.

Je nach örtlicher Anordnung und/oder Wirkweise des Elektromagneten kann dabei eine unterschiedliche Einstellung der Rückhaltewirkung sinnvoll sein. Das heißt die automatische Einstellung der Rückhaltewirkung kann davon abhängig sein, ob der Elektromagnet an der Schalteinheit, Wickeleinheit oder einem anderen Bauteil angeordnet ist und/oder ob der Elektromagnet anziehend oder abstoßend wirkt.

Es wird in diesem Zusammenhang als eigenständige Erfindung angesehen, eine Ballenwickelvorrichtung nach dem Oberbegriff von Anspruch 1 zur Verfügung zu stellen, welche eine Stelleinrichtung aufweist, die dazu eingerichtet ist, die Rückhaltewirkung in Abhängigkeit von dem Bewegungszustand des Rahmens relativ zu dem Untergrund automatisch einzustellen.

Bei Ausführungsformen der Ballenwickelvorrichtung, welche ein eigenes Fahrwerk zum Abstützen gegenüber dem Untergrund aufweisen, ist der Bewegungszustand vorzugsweise ein Fahrzustand der Ballenwickelvorrichtung. Bei Ausführungsformen, die kein eigenes Fahrwerk aufweisen, sondern von dem Zugfahrzeug getragen werden, kann der Bewegungszustand durch einen Fahrzustand des Zugfahrzeugs bestimmt sein.

Die Ballenwickelvorrichtung kann ein oder mehrere Steuergeräte aufweisen, die dazu eingerichtet sind, Signale zu verarbeiten und Befehle an Aktoren und/oder Motoren auszugeben. Die Stelleinrichtung kann in diesem Fall beispielsweise wenigstens ein Steuergerät aufweisen oder durch wenigstens ein Steuergerät gebildet sein.

Durch die Abhängigkeit vom Bewegungszustand unterscheidet sich die Rückhaltewirkung in einem bewegten Zustand von einem unbewegten Zustand des Rahmens. Der bewegte Zustand beschreibt dabei einen Zustand, in dem der Rahmen eine Relativgeschwindigkeit gegenüber dem Untergrund aufweist. Im unbewegten Zustand weist der Rahmen keine Relativgeschwindigkeit gegenüber dem Untergrund auf. Bei der Relativgeschwindigkeit kann es sich insbesondere um eine Fahrgeschwindigkeit der Ballenwickelvorrichtung und/oder der Zugmaschine handeln.

Neben der automatischen Einstellung in Abhängigkeit davon, ob eine von Null verschiedene Relativgeschwindigkeit des Rahmens vorliegt, kann die Einstellung auch in Abhängigkeit von der Relativgeschwindigkeit, insbesondere einem Absolutbetrag der Relativgeschwindigkeit, erfolgen. Das heißt, die Stelleinrichtung kann eingerichtet sein, für unterschiedliche von Null verschiedene Relativgeschwindigkeiten unterschiedliche Rückhaltewirkungen einzustellen. Insbesondere kann sie dazu eingerichtet sein, für unterschiedliche Absolutbeträge unterschiedliche Rückhaltewirkungen einzustellen.

Wie bereits beschrieben, ist die Rückhaltewirkung im optimalen Fall derart bemessen, dass der Hinderniskontakt schonend verläuft, die Sicherheitsmaßnahme sicher ausgelöst wird und gleichzeitig Fehlauslösungen vermieden werden. Die Betriebs- und/oder Umgebungsbedingungen unterscheiden sich wesentlich im bewegten und unbewegten Zustand. Im unbewegten Zustand ist beispielsweise eher mit Personen zu rechnen, die sich versehentlich in den Bewegungsbereich der Wickeleinheit begeben können. Bei bewegter Maschine ist es wiederum wahrscheinlicher, dass sich der Erntegutballen unbeabsichtigt aus der Ballenwickelvorrichtung löst. Außerdem kann es bei bewegter Maschine häufiger zu Fehlauslösungen kommen, insbesondere wenn Bodenunebenheiten überfahren werden und/oder die Ballenwickelvorrichtung in Hanglage bewegt wird. Daher ist es sinnvoll, die Rückhaltewirkung auf die für den aktuellen Bewegungszustand optimale Einstellung automatisch anzupassen.

Die automatische Einstellung hat zudem den Vorteil, den Bediener der Ballenwickelvorrichtung zu entlasten. Sobald der entsprechende Bewegungszustand erfasst wird, erfolgt die automatische Anpassung der Rückhaltewirkung. Der Bewegungszustand kann dabei prinzipiell auf unterschiedliche Weise erfassbar sein. Beispielsweise kann ein Drehzahlsensor an einem Fahrantrieb, einem Rad oder einem Getriebe vorgesehen sein, um den Bewegungszustand zu erfassen. Zur Erfassung des Bewegungszustands kann auch ein GPS-Sensor und/oder ein Beschleunigungssensor vorgesehen sein. Dabei können ein oder mehrere solcher Sensoren vorhanden sein. Ein Sensor kann der Ballenwickelvorrichtung und/oder dem Zugfahrzeug zugeordnet sein.

Die automatische Einstellung der Rückhaltewirkung kann dabei nach vorgegebenen Werten erfolgen. Die Werte können beispielsweise in einem Speicher hinterlegt und auslesbar sein. Sie können alternativ oder zusätzlich auch durch den Bediener der Ballenwickelvorrichtung eingebbar und/oder von einem entfernten Rechenzentrum abrufbar sein.

Um die Schalteinheit von der Grundposition in die Auslöseposition auszulenken, ist eine Auslöseenergie notwendig. Da zur Auslösung die Rückhaltewirkung zu überwinden ist, besteht prinzipiell ein Zusammenhang zwischen der Rückhaltewirkung und der Auslöseenergie. Je höher die Rückhaltewirkung, desto höher die benötigte Auslöseenergie. In der Regel handelt es sich bei der Auslöseenergie um eine Impulsenergie, die beim Kontakt mit dem Hindernis auf die Schalteinheit übertragen wird, um diese in die Auslöseposition auszulenken. Es ist vorteilhaft, die Auslöseenergie im unbewegten Zustand auf ein normgerechtes Maß einzustellen. Insbesondere kann die Rückhaltewirkung derart eingestellt sein, dass die Auslöseenergie nicht mehr als 20 J beträgt. Für den bewegten Zustand kann die Rückhaltewirkung jedoch an die aktuell vorherrschenden Betriebsbedingungen angepasst werden.

Besonders bevorzugt ist, dass die Rückhaltewirkung in einem bewegten Zustand des Rahmens gegenüber einem unbewegten Zustand des Rahmens erhöht ist. Im unbewegten Zustand ist die Rückhaltewirkung demnach geringer als im bewegten Zustand. Der Widerstand ist dadurch im bewegten Zustand erhöht und die Schalteinheit weniger empfindlich eingestellt. Dadurch kann die Anzahl der Fehlauslösungen im bewegten Zustand reduziert werden, wobei gleichzeitig im unbewegten Zustand eine hohe Sicherheit durch die empfindliche Auslösung hergestellt ist.

Prinzipiell wäre es möglich, die Grundposition zu verändern, um die Empfindlichkeit der Auslösung und/oder die Auslöseenergie anzupassen. Es ist jedoch bevorzugt, dass die Rückhaltewirkung unabhängig von der Grundposition der Schalteinheit und/oder bei gleichbleibender Grundposition einstellbar ist. Dadurch kann eine Änderung der Empfindlichkeit und/oder der Auslöseenergie herbeigeführt werden, ohne eine Änderung der Grundposition in Kauf nehmen zu müssen.

Es ist dabei weiterhin bevorzugt, dass die Rückhaltewirkung in Abhängigkeit von wenigstens einem zusätzlichen Parameter einstellbar ist. Durch die Verwendung des zusätzlichen Parameters kann das Auslöseverhalten der Schalteinheit weiter optimiert werden. Dadurch können die Zuverlässigkeit und/oder die Sicherheit weiter gesteigert werden. Als zusätzlicher Parameter kann beispielsweise eine Bodenneigung verwendet werden. Insbesondere auch in Kombination mit der Einstellung in Abhängigkeit von der Relativgeschwindigkeit des Rahmens kann hierdurch eine feinere und/oder optimalere Einstellung der Rückhaltewirkung erfolgen. Beim Überfahren von Bodenwellen mit hoher Fahrgeschwindigkeit und/oder beim Befahren eines steilen Hanges können mit Hilfe dieser Einstellmöglichkeit Fehlauslösungen besser vermieden werden.

Es ist bevorzugt, dass die Schalteinheit einen um eine Schwenkachse zwischen der Grundposition und der Auslöseposition verschwenkbaren Schaltarm aufweist. Insbesondere kann der Schaltarm die Schalteinheit bilden. Bevorzugt weist zudem die Wickeleinheit einen Wickelarm auf, welcher um die Wickelachse antreibbar ist. Insbesondere kann der Wickelarm die Wickeleinheit bilden. Der Wickelarm und/oder der Schaltarm erstrecken sich insbesondere zumindest abschnittsweise von der Wickelachse radial nach außen und/oder sind zumindest abschnittsweise parallel zu der Wickelachse ausgerichtet.

Im Betrieb eilt die Schalteinheit der Wickeleinheit in Rotationsrichtung voraus. Hierfür ist es bevorzugt, dass der Schaltarm dem Wickelarm in Rotationsrichtung vorauseilend angeordnet ist. Der Schaltarm ist außerdem bevorzugt relativ zum Wickelarm um die Schwenkachse schwenkbar gelagert. In der Auslöseposition kann der Schaltarm insbesondere näher zum Wickelarm angeordnet sein als in der Grundposition.

In einer vorteilhaften Ausgestaltung kann die Ballenwickelvorrichtung eine Mehrzahl von Wickeleinheiten und/oder Schalteinheiten aufweisen. Besonders bevorzugt ist es dabei, dass für jede Wickeleinheit genau eine Schalteinheit vorgesehen ist. In der Ausbildung als Wickelarm und Schaltarm, ist der Schaltarm gegenüber dem ihm zugeordneten Wickelarm vorauseilend angeordnet und/oder verschwenkbar gelagert.

Bevorzugt ist, dass durch die Elektromagnetkraft und/oder die Zusatzkraft ein Rückhaltemoment um die Schwenkachse eingeleitet wird, wobei das Rückhaltemoment dem Verschwenken des Schaltarms von der Grundposition in die Auslöseposition entgegengerichtet wirkt. Der Schaltarm kann dadurch bei Kontakt mit dem Hindernis durch Überwinden des Rückhaltemomentes durch Verschwenken um die Schwenkachse zurückweichen. Die Rückhaltewirkung beruht in dieser Ausführungsform zumindest teilweise, insbesondere ausschließlich, auf dem Rückhaltemoment, das durch die Elektromagnetkraft und/oder die Zusatzkraft eingeleitet wird.

Die Sicherheitsmaßnahme kann verschiedene Vorgänge umfassen. So kann die Sicherheitsmaßnahme dazu vorgesehen sein, ein Warnsignal an den Bediener der Ballenwickelvorrichtung auszugeben und/oder eine Steuerung der Ballenwickelvorrichtung und/oder des Zugfahrzeugs herbeizuführen. Es ist besonders bevorzugt, dass die Sicherheitsmaßnahme zumindest dazu vorgesehen ist, die Wickeleinheit wenigstens abzubremsen. Das Abbremsen der Wickeleinheit erfolgt vorzugsweise bis zu einem Stillstand der Wickeleinheit. Insbesondere kann es vorgesehen sein, die Wickeleinheit vor Erreichen eines Kontaktpunkts der Schalteinheit mit dem Hindernis anzuhalten, um Verletzungen und/oder Beschädigungen zu verhindern.

Die Auslösung der Sicherheitsmaßnahme erfolgt bei der vorstehend genannten Ausführungsform durch Auslenkung des Schaltarms in die Auslöseposition. Die Auslöseposition kann eine Endposition in einem Schwenkbereich des Schaltarms oder eine beliebige Position zwischen der Grundposition und der Endposition sein.

Die Auslenkung in die Auslöseposition kann mit mechanischen und/oder elektronischen Mitteln erfasst werden. Entsprechend kann die Ballenwickelvorrichtung eine Auslösemechanik aufweisen, wobei die Auslösemechanik durch Verstellung des Schaltarms in die Auslöseposition betätigbar ist. Die Mechanik kann beispielsweise ein oder mehrere Hebel umfassen, die bei Betätigung die Abbremsung der Wickeleinheit bewirken. Hierfür können die Hebel beispielsweise ein Ventil und/oder eine Bremse aktivieren.

Alternativ oder zusätzlich kann die Ballenwickelvorrichtung einen Sensor aufweisen, der dazu vorgesehen ist, eine Position des Schaltarms relativ zum Wickelarm zu erfassen und, insbesondere elektronisch, in Abhängigkeit von der erfassten Position ein Sensorsignal an die Stelleinrichtung auszugeben. In dieser Ausführungsform ist die Stelleinrichtung dazu eingerichtet, das Sensorsignal zu verarbeiten und die Durchführung der Sicherheitsmaßnahme durch Ausgabe von Steuerbefehlen herbeizuführen.

Die Positionserfassung durch den Sensor kann kontaktlos, insbesondere induktiv und/oder kapazitiv, erfolgen. Ebenso bevorzugt kann der Sensor ein Betätigungsmittel aufweisen, das bei Verstellung von der Grundposition in die Auslöseposition durch die Schalteinheit betätigbar ist, wobei bei Betätigung die Sicherheitsmaßnahme, insbesondere durch Ausgabe des Sensorsignals auslösbar ist. Das Betätigungsmittel kann dafür insbesondere als ein Hebel, Schieber oder dgl. ausgebildet sein.

Die Stelleinrichtung der Ballenwickelvorrichtung kann dazu eingerichtet sein, das Signal zu verarbeiten und durch Ausgabe von Steuerbefehlen die Durchführung der Sicherheitsmaßnahme herbeizuführen.

Durch die Erfindung wird außerdem ein Verfahren zum Betreiben einer Ballenwickelvorrichtung zur Verfügung gestellt. Die Ballenwickelvorrichtung weist die Merkmale des Oberbegriffs des Patentanspruchs 1 auf, die hier nicht wiederholt erläutert werden.

Bei dem erfindungsgemäßen Verfahren ist es vorgesehen, dass die Rückhaltewirkung der Halteeinrichtung in Abhängigkeit von einem Bewegungszustand des Rahmens der Ballenwickelvorrichtung automatisch eingestellt wird. Das automatische Einstellen erfolgt bevorzugt mittels einer Stelleinrichtung. Die Stelleinrichtung kann dabei der Ballenwickelvorrichtung zugeordnet sein. Sie kann auch getrennt von der Ballenwickelvorrichtung angeordnet sein. Dabei kann sie bei einer Ausführung der Ballenwickelvorrichtung als Anbaugerät oder gezogener Maschine einem Zugfahrzeug, an dem die Ballenwickelvorrichtung angebaut oder angehängt ist, zugeordnet sein.

Bei dem Verfahren wird insbesondere der Erntegutballen mit der Wickeleinheit der Ballenwickelvorrichtung während eines Wickelvorgangs umwickelt. Während des Wickelvorgangs wird die Wickeleinheit um die Wickelachse in die Rotationsrichtung rotierend angetrieben. Zudem wird während des Wickelvorgangs die Schalteinheit in der Grundposition von der Halteeinrichtung gehalten. Die Schalteinheit eilt der Wickeleinheit in Rotationsrichtung voraus. Sie wird insofern ebenfalls um die Wickelachse rotierend angetrieben.

Sobald ein Hindernis während des Wickelvorgangs von der Schalteinheit erfasst wird, werden bei dem Verfahren insbesondere die im Nachfolgenden beschriebenen Schritte ausgeführt:
- die Schalteinheit wird von der Grundposition in die Auslöseposition ausgelenkt;
- die Rückhaltewirkung der Halteeinrichtung wird beim Auslenken der Schalteinheit überwunden; und
- die Sicherheitsmaßnahme der Ballenwickelvorrichtung wird durch die Auslenkung der Schalteinheit in die Auslöseposition ausgelöst.

Durch das Verfahren wird vorteilhaft die Rückhaltewirkung in Abhängigkeit vom Bewegungszustand optimiert. Die Schalteinheit kann zur Erreichung einer hohen Sicherheit in einem unbewegten Zustand eine empfindliche Auslösung aufweisen. Dafür wird die Rückhaltewirkung im unbewegten Zustand reduziert. Weiterhin kann die Zuverlässigkeit erhöht werden, indem in einem bewegten Zustand die Rückhaltewirkung zur Vermeidung von Fehlauslösungen erhöht wird.

Die genannten Begriffe wurden bereits oben mit Bezug auf die erfindungsgemäße Ballenwickelvorrichtung erläutert. Vorteilhafte Ausführungen des erfindungsgemäßen Verfahrens entsprechen denen der erfindungsgemäßen Ballenwickelvorrichtung.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine perspektive Ansicht einer ersten Ausführungsform einer erfindungsgemäßen Ballenwickelvorrichtung;
- Fig. 2: eine perspektivische Teilansicht der Ballenwickelvorrichtung aus Fig. 1;
- Fig. 3: eine perspektivische Teilansicht einer zweiten Ausführungsform einer erfindungsgemäßen Ballenwickelvorrichtung;
- Fig. 4: eine perspektivische Teilansicht einer dritten Ausführungsform einer erfindungsgemäßen Ballenwickelvorrichtung; und
- Fig.5: eine perspektivische Teilansicht einer vierten Ausführungsform einer erfindungsgemäßen Ballenwickelvorrichtung.

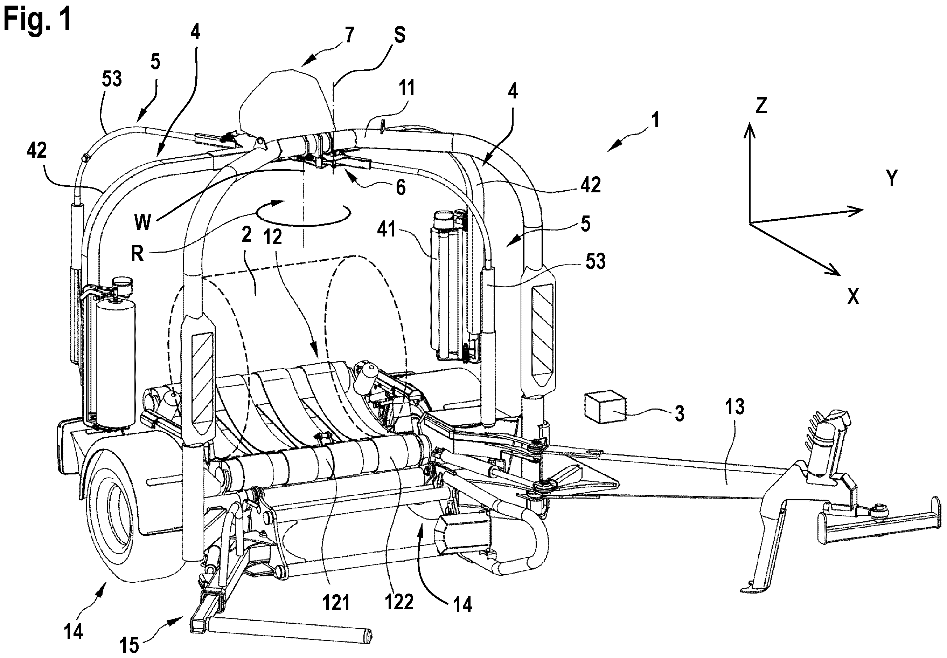

Fig. 1 zeigt eine erste Ausführungsform einer erfindungsgemäßen Ballenwickelvorrichtung 1 zum Umwickeln eines Erntegutballens 2 mit einem Wickelmaterial 41. In den Figuren sind eine Längsachse X, eine Querachse Y sowie eine Hochachse Z eingezeichnet.

Die Ballenwickelvorrichtung 1 ist in diesem Fall in der Art einer gezogenen Arbeitsmaschine ausgeführt. Sie weist einen Rahmen 11 auf, der sich mittels Räder eines Fahrwerks 14 an einem Boden oder Untergrund 8 abstützt. Die Ballenwickelvorrichtung 1 weist eine bezüglich der Längsachse X vorderseitig am Rahmen 11 angeordnete Anhängevorrichtung 13 in Form einer Deichsel auf, mit der sie an ein Zugfahrzeug angehängt werden kann, um von diesem gezogen zu werden.

Die Ballenwickelvorrichtung 1 weist ferner eine Hebeeinrichtung 15 auf, die dazu eingerichtet ist, den Erntegutballen 2 vom Untergrund 8 aufzuheben und auf einen Wickeltisch 12 zu platzieren.

Zum Umwickeln des Erntegutballens 2 ist zumindest eine Wickeleinheit 4 vorgesehen. In dieser Ausführungsform weist die Ballenwickelvorrichtung 1 zwei Wickeleinheiten 4 auf, die jeweils als Wickelarm 42 ausgebildet sind. Jeder der Wickelarme 42 trägt eine Rolle mit dem bahnförmigen Wickelmaterial 41 in etwa auf einer Höhe des auf dem Wickeltisch 12 angeordneten Erntegutballens 2. Das Wickelmaterial 41 ist dabei an einem freien Ende des Wickelarmes 42 angeordnet. Während des Wickelvorgangs rotieren die Wickelarme 42 um eine Wickelachse W in einer zumindest bereichsweise um den Erntegutballen 2 umlaufenden Rotationsbewegung. Beim Rotieren der Wickelarme 42 wird das Wickelmaterial 41 von den Rollen abgezogen und auf den Erntegutballen 2 aufgebracht, sodass dieser mit dem Wickelmaterial 41 aufgebracht wird.

Um die vollständige Oberfläche des Erntegutballens 2 mit dem Wickelmaterial 41 zu erfassen, wird der Erntegutballen 2 während des Wickelvorgangs zudem um eine Symmetrieachse des Erntegutballens 2 in Drehung versetzt. In diesem Beispiel ist der Erntegutballen 2 als Rundballen ausgeführt und auf dem Wickeltisch 12 derart ausgerichtet, dass sich seine Symmetrieachse in etwa parallel zur Querachse Y erstreckt. Zum Drehen des Erntegutballens 2 weist der Wickeltisch 12 mehrere Bänder 122 auf, die mittels zumindest einer antreibbaren Rolle 121 angetrieben werden. Durch die Rotation der Wickelarme 42 um die Wickelachse W und der Drehung des Erntegutballens 2 um die Ballenachse wird der Erntegutballen 2 mit dem Wickelmaterial 41 allseitig umwickelt. Die Wickelachse W verläuft dabei durch einen mittleren Bereich des Erntegutballens 2 und erstreckt sich in diesem Beispiel parallel zur Hochachse Z.

Die Ballenwickelvorrichtung 1 weist einen Wickelantrieb 7 auf, der dazu eingerichtet ist, die Wickelarme 42 in eine Rotationsrichtung R anzutreiben. Die für den Antrieb benötigte Energie wird in der dargestellten Ausführungsform als gezogene Arbeitsmaschine durch das Zugfahrzeug bereitgestellt, beispielsweise über eine Hydraulikzufuhr.

Die Rotationsbewegung der Wickelarme 42 definiert einen Bewegungsbereich der Ballenwickelvorrichtung 1. Da das Wickelmaterial 41 zumeist ein hohes Eigengewicht aufweist, besteht eine Gefahr für Beschädigungen und/oder Verletzungen bei Kollision des Wickelarmes 42 mit einem Hindernis, das in den Bewegungsbereich gelangt. Die Ballenwickelvorrichtung 1 weist für jede der Wickeleinheiten 4 jeweils eine Schalteinheit 5 auf, die dazu vorgesehen ist, das Hindernis zu erfassen, unmittelbar bevor oder sobald es in den Bewegungsbereich der zugeordneten Wickeleinheit 4 gelangt.

In diesem Fall sind die beiden Schalteinheiten 5 jeweils als Schaltarm 53 ausgebildet. Jeder der Schaltarme 53 eilt dem ihm zugeordneten Wickelarm 42 in Rotationsrichtung R voraus. Dafür wird er ebenfalls von dem Wickelantrieb 7 in Rotationsrichtung R um die Wickelachse W angetrieben.

Da jeder der Schaltarme 53 dem zugeordneten Wickelarm 42 vorauseilt, kann er das Hindernis erfassen, bevor der Wickelarm 42 dieses erreicht. Bei Erfassung des Hindernisses wird eine Sicherheitsmaßnahme ausgelöst, die zumindest dazu vorgesehen ist, die Wickelarme 42 abzubremsen. Eine Bremsverzögerung der Wickelarme 42 ist dabei in aller Regel so bemessen, dass die Wickelarme 42 anhalten, bevor sie einen Kontaktpunkt des Schaltarms 53 mit dem Hindernis erreichen. Durch die Sicherheitsmaßnahme werden daher Verletzungen und/oder Beschädigungen aufgrund einer Kollision des Hindernisses mit dem Wickelarm 42 vermieden. Die Schaltarme 53 sind außerdem nachgiebig gelagert, um bei Kontakt mit dem Hindernis zurückzuweichen.

Die Wickelarme 42 und Schaltarme 53 erstrecken sich jeweils in einem Horizontalabschnitt von dem Wickelantrieb 7 ausgehend radial nach außen und in einem Vertikalabschnitt in etwa parallel zur Wickelachse W und zur Hochachse Z in Richtung des Untergrunds 8.

Die Ballenwickelvorrichtung 1 weist eine Halteeinrichtung 6 auf, die dazu ausgebildet ist, den Schaltarm 53 in einer Grundposition zu halten. Die Haltefunktion der Halteeinrichtung 6 erfolgt durch Ausübung einer Rückhaltewirkung auf den Schaltarm 53 und dient insbesondere dazu, diesen bei Anfahrt, Beschleunigung und/oder Betrieb der Ballenwickelvorrichtung 1 sicher in der Grundposition zu fixieren. Die Rückhaltewirkung stellt einen Widerstand dar, der einer Auslenkung des Schaltarms 53 aus der Grundposition heraus entgegensteht. Durch Überwinden der Rückhaltewirkung wird der Schaltarm 53 von der Grundposition ausgehend in eine Auslöseposition verstellt. Für das Überwinden der Rückhaltewirkung ist eine Auslöseenergie erforderlich. Die für die Auslösung benötigte Auslöseenergie wird durch die Rückhaltewirkung bestimmt. Damit der Aufprall des Schaltarms 53 auf ein Hindernis schonend verläuft, sollte die Auslöseenergie möglichst gering sein. Beispielsweise sollte die Auslöseenergie, wie von der Sicherheitsnorm DIN EN ISO 4254-14:2016 vorgeschlagen, einen Wert von 20 J nicht überschreiten.

Bei Auslenkung des Schaltarms in die Auslöseposition wird die Sicherheitsmaßnahme automatisch ausgelöst. Hierfür wird ein Sensorsignal von der Schalteinheit 5 an eine Stelleinrichtung 3 ausgegeben. Die Stelleinrichtung 3 verarbeitet das Sensorsignal und gibt einen Steuerbefehl aus, um die Wickeleinheit 4 anzuhalten. In diesem Ausführungsbeispiel ist die Stelleinrichtung 3 mit dem Wickelantrieb 7 signaltechnisch verbunden, um diesen anzusteuern.

Die Stelleinrichtung 3 ist hier in vereinfachter Darstellung neben der Ballenwickelvorrichtung 1 gezeigt, was allerdings nicht zwangsläufig die tatsächliche Anordnung wiedergibt. Die Stelleinrichtung 3 kann beispielsweise an der Ballenwickelvorrichtung 1 angeordnet oder in diese integriert sein. Alternativ kann sie beispielsweise auch von dem Zugfahrzeug und/oder einem entfernt angeordneten Computersystem umfasst sein.

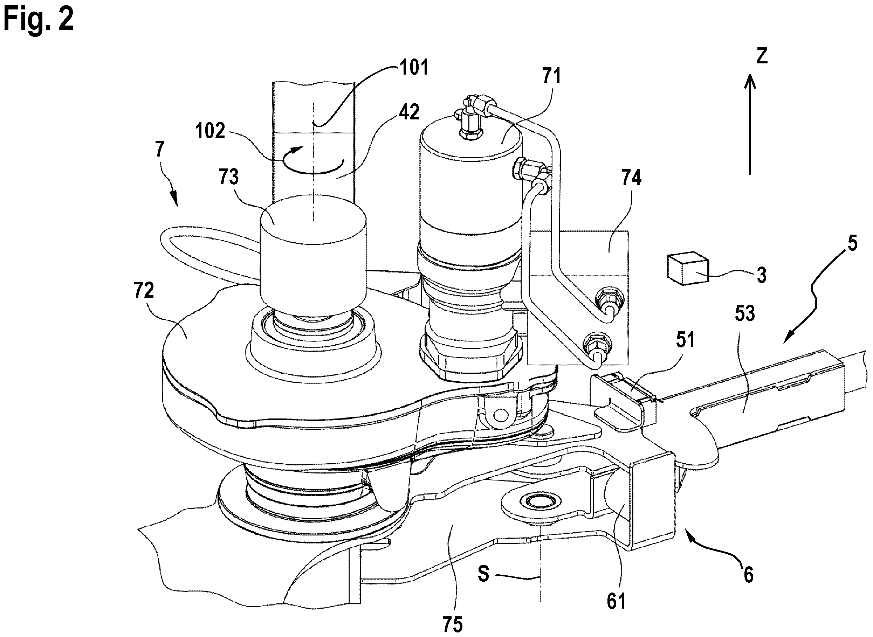

Im Folgenden wird die Funktionsweise der Halteeinrichtung 6 unter Bezugnahme der Fig. 2 näher erläutert. Dargestellt ist in Fig. 2 eine vergrößerte Teilansicht der in Fig. 1 gezeigten ersten Ausführungsform der Ballenwickelvorrichtung 1. Die Ansicht ist auf die Halteeinrichtung 6 und den Wickelantrieb 7 gerichtet. Die Wickelarme 42 und Schaltarme 53 sind hier lediglich im Ansatz dargestellt. Außerdem ist gegenüber der Fig. 1 eine Abdeckung des Wickelantriebs 7 ausgeblendet, um eine bessere Sicht auf Elemente der Halteeinrichtung 6 und den Wickelantrieb 7 zu ermöglichen.

Hier ist der Schaltarm 53 in der Grundposition dargestellt. Die Verstellung des Schaltarms 53 von der Grundposition in die Auslöseposition erfolgt durch eine Schwenkbewegung um eine Schwenkachse S, die in diesem Beispiel parallel zur Hochachse Z verläuft. Die Schwenkbewegung des Schaltarms 53 erfolgt jeweils relativ zu dem ihm zugeordneten Wickelarm 42. In der Grundposition ist der Schaltarm 53 weiter vom Wickelarm 42 beabstandet als in der Auslöseposition.

Die Halteeinrichtung 6 weist einen Elektromagneten 61 auf, der dazu vorgesehen ist, die Rückhaltewirkung zu beeinflussen. Der Elektromagnet 61 ist dazu ausgebildet, den Schaltarm 53 mit einer Elektromagnetkraft zu beaufschlagen, die zumindest zur Rückhaltewirkung beiträgt. In dem in Fig. 2 gezeigten Ausführungsbeispiel wird die Rückhaltewirkung sogar ausschließlich durch den Elektromagneten 61 erbracht. Im Detail wird durch die Elektromagnetkraft ein Rückhaltemoment bezüglich der Schwenkachse S eingeleitet, das der Verschwenkung von der Grundposition in die Auslöseposition entgegenwirkt.

Die Elektromagnetkraft des Elektromagneten 61 ist dabei variabel einstellbar. Das Einstellen erfolgt durch Steuerung eines durch den Elektromagneten 61 fließenden Stroms mittels der Stelleinrichtung 3. Durch die Stelleinrichtung 3 kann dabei die Elektromagnetkraft zugeschaltet, ausgeschaltet und/oder in ihrer Stärke verändert werden.

Die Stelleinrichtung 3 ist dazu eingerichtet, die Elektromagnetkraft in Abhängigkeit von einem Bewegungszustand einzustellen. Im Speziellen ist sie dazu eingerichtet, die Elektromagnetkraft in einem bewegten Zustand, in dem der Rahmen 11 der Ballenwickelvorrichtung 1 eine Relativgeschwindigkeit gegenüber einem Untergrund 8 aufweist, gegenüber einem unbewegten Zustand, in dem der Rahmen 11 relativ zum Untergrund 8 keine Relativgeschwindigkeit aufweist, zu erhöhen. Im bewegten Zustand wird dafür der Stromfluss des Elektromagneten 61 erhöht. Dabei wird sichergestellt, dass die Auslöseenergie für die Auslösung der Sicherheitsmaßnahme im unbewegten Zustand einen definierten Wert nicht überschreitet. Insbesondere wird sichergestellt, dass die Auslöseenergie den oben genannten Wert von 20 Joule nicht überschreitet. Im unbewegten Zustand wird der Stromfluss im Elektromagneten 61 auf einen definierten Wert erhöht, der sich insbesondere an den Betriebs- und/oder Umgebungsbedingungen orientiert.

Der Bewegungszustand kann dabei auf an sich bekannte Art und Weise sensorisch erfasst werden. So kann ein GPS-Sensor, ein Beschleunigungssensor und/oder ein Drehzahlsensor zur Erfassung der Relativgeschwindigkeit an der Ballenwickelvorrichtung 1 und/oder am Zugfahrzeug vorhanden sein. Die Einstellung der Rückhaltewirkung erfolgt automatisch in Abhängigkeit vom sensorisch erfassten Bewegungszustand.

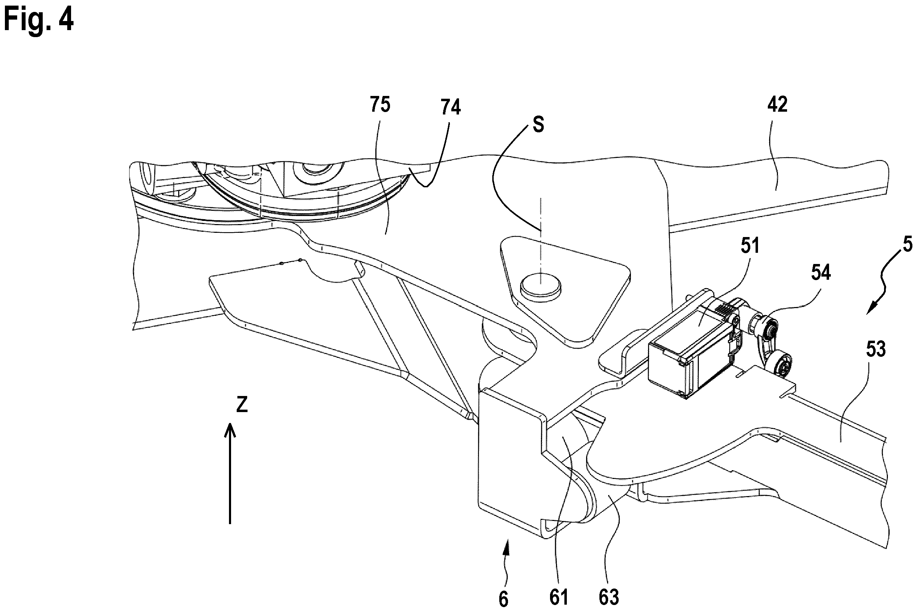

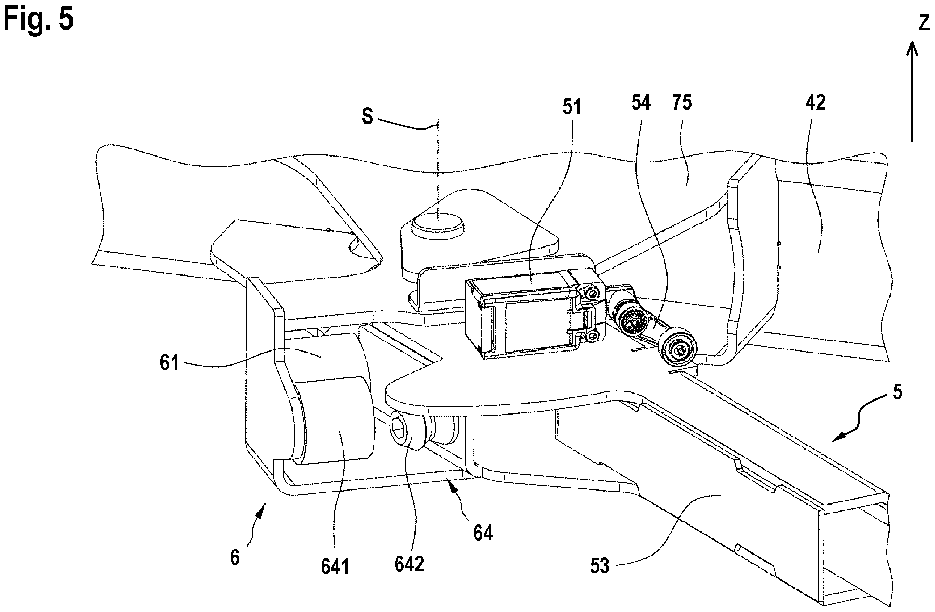

Das Auslösen der Sicherheitsmaßnahme erfolgt ebenfalls automatisch, sobald der Schaltarm 53 in die Auslöseposition verschwenkt wird. Der Schalteinheit 5 ist ein Sensor 51 zugeordnet, der zur Erfassung der Position des Schaltarms 53 vorgesehen ist. Der Sensor 51 erfasst die Verstellung des Schaltarms 53 in die Auslöseposition und sendet ein Sensorsignal an die Stelleinrichtung 3. Zur Erfassung der Auslöseposition weist der Sensor 51 ein Betätigungsmittel 54 (siehe Fig. 4 und 5) auf, das durch die Schwenkbewegung des Schaltarms in die Auslöseposition betätigbar ist. Das Betätigungsmittel 54 ist hier als ein Hebel ausgebildet. Die Stelleinrichtung 3 verarbeitet das Sensorsignal und gibt einen Steuerbefehl zur Durchführung der Sicherheitsmaßnahme aus. Die Sicherheitsmaßnahme umfasst zumindest das Anhalten der Wickelarme 42. Die Sicherheitsmaßnahme umfasst optional weitere Vorgänge, wie beispielsweise das Ausgeben eines Warnsignals an einen Bediener der Ballenwickelvorrichtung 1 über eine Bedienerschnittstelle, das Speichern und/oder Versenden eines Unfallprotokolls, das Ansteuern des Wickeltisches 12 und/oder einer weiteren Einrichtung der Ballenwickelvorrichtung 1. Zudem kann die Sicherheitsmaßnahme eine Steuerung der Zugmaschine umfassen, insbesondere eines Fahrantriebs der Zugmaschine.

Der Wickelantrieb 7 weist einen Hydraulikmotor 71 auf, der über einen Ventilblock 74 ansteuerbar ist. Eine Energieversorgung des Hydraulikmotors 71 erfolgt über einen Hydraulikdruck, der über eine nicht gezeigte Zuleitung von dem Zugfahrzeug bereitgestellt wird. Das Abbremsen und/oder Anhalten des Hydraulikmotors 71 erfolgt über die Ansteuerung des Ventilblocks 74. Dabei ist der Ventilblock 74 dazu eingerichtet, den Steuerbefehl der Stelleinrichtung 3 elektronisch zu verarbeiten. Er kann alternativ auch direkt mit dem Sensor 51 der Schalteinheit 5 verbunden sein, um das Sensorsignal des Sensors 51 direkt, das heißt unabhängig von der Stelleinrichtung 3, zu empfangen und zu verarbeiten.

Des Weiteren umfasst der Wickelantrieb 7 ein Getriebe 72, das trieblich mit dem Hydraulikmotor 71 verbunden ist. Am Ausgang des Getriebes 72 ist ein Antriebselement 75 angekoppelt, das vom Getriebe 72 antreibbar ist und an dem die Wickelarme 42 und Schaltarme 53 angeordnet sind. Jeder der Wickelarme 42 ist ortsfest an das Antriebselement 75 angebaut. Das Antriebselement 75 ist daher starr mit jedem Wickelarm 42 verbunden. Jeder der Schaltarme 53 ist wiederum am Antriebselement 75 um die Schwenkachse S drehbar gelagert. Da der Wickelarm 42 ortsfest am Antriebselement 75 angebaut ist, ist der Schaltarm 53 auch relativ zum Wickelarm 42 verdrehbar. Die Wickelachse W ist durch eine Antriebsachse des Antriebselements 75 definiert. Die Schwenkachse S des Schaltarms 53 ist im ersten Abschnitt des Schaltarms 53 angeordnet und erstreckt sich in diesem Beispiel parallel zur Wickelachse W.

Außerdem umfasst der Wickelantrieb 7 eine Drehdurchführung 73. Die Drehdurchführung 73 weist einen elektrischen Schleifring auf, um eine Stromversorgung des Elektromagneten 61 sowie eine Signalweitergabe zumindest zwischen der Stelleinrichtung 3, dem Ventilblock 74 und dem Sensor 51 der Schalteinheit 5 zu ermöglichen. Im Schleifring kann auch ein (nicht dargestellter) Drehwinkelsensor integriert sein.

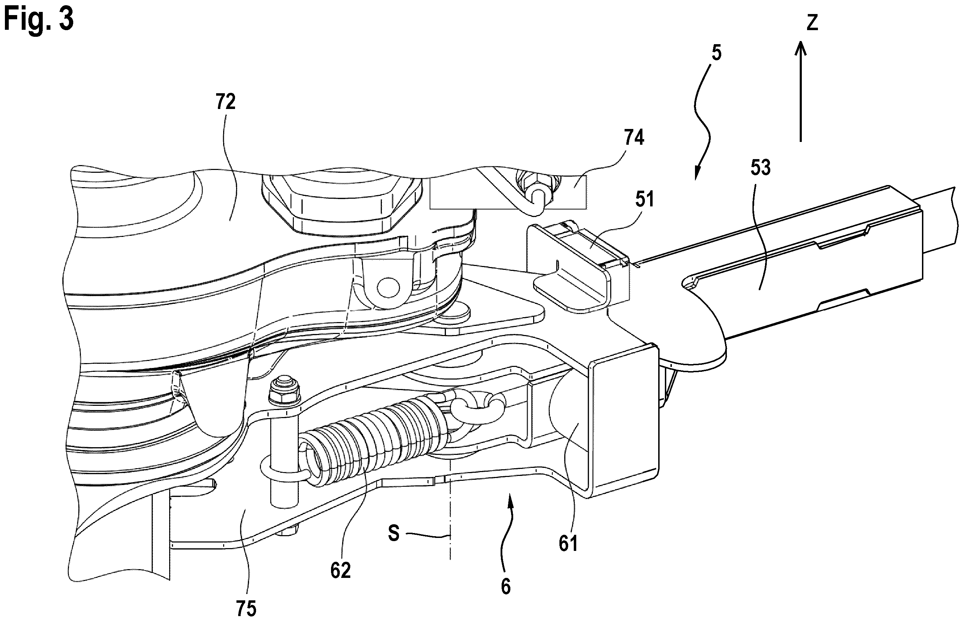

Wie anhand der in den Fig. 3 - 5 dargestellten Ausführungsbeispiele nachfolgend noch erläutert wird, kann die Halteeinrichtung 6 zusätzlich zu dem Elektromagneten 61 ein Kraftmittel 62, 63, 64 aufweisen, das dazu vorgesehen, ist die Rückhaltewirkung zu beeinflussen. Das Kraftmittel 62, 63, 64 ist dazu ausgebildet, eine Zusatzkraft auf den Schaltarm 53 auszuüben. Die Zusatzkraft trägt zumindest zur Rückhaltewirkung der Halteeinrichtung 6 bei. Das Kraftmittel 62, 63, 64 wirkt unabhängig vom Elektromagneten 61. Dadurch wird sogar bei abgeschaltetem Elektromagneten 61 der Schaltarm 53 durch das Kraftmittel 62, 63, 64 in der Grundposition gehalten und die Rückhaltewirkung wird als Widerstand gegenüber dem Verschwenken in die Auslöseposition aufgebracht.

Fig. 3 zeigt eine perspektivische Teilansicht einer zweiten Ausführungsform der Ballenwickelvorrichtung 1. Die zweite Ausführungsform unterscheidet sich von der ersten Ausführungsform lediglich durch die Halteeinrichtung 6. Daher werden die übrigen Bezugszeichen nicht erneut erläutert. Der Wickelantrieb 7, die Wickelarme 42 und die Schaltarme 53 sind in dieser Teilansicht lediglich im Ansatz dargestellt.

Das Kraftmittel ist in diesem Ausführungsbeispiel als eine Feder 62 ausgebildet. Speziell handelt es sich bei der Feder 62 um eine Zugfeder. Mit einem ersten Ende greift die Feder 62 an dem Antriebselement 75 und mit einem zweiten Ende an dem Schaltarm 53 an. Die Feder 62 ist zur Ausübung der Zusatzkraft ausgebildet. Die Zusatzkraft entspricht in dieser Ausführung einer Rückstellkraft der Feder 62. Die Zusatzkraft trägt zumindest zur Rückhaltewirkung bei, durch welche der Schaltarm 53 in der Grundposition gehalten und ein Widerstand dem Verschwenken von der Grundposition in die Auslöseposition entgegengebracht wird. Sofern die oben genannte Auslöseenergie von 20 J exakt eingehalten werden soll, kann die Rückstellkraft der Feder 62 in hier nicht dargestellter Weise einstellbar sein, zum Beispiel durch Einstellen einer Vorspannung.

Fig. 4 zeigt eine perspektivische Teilansicht einer dritten Ausführungsform der Ballenwickelvorrichtung 1, welche sich von der zweiten Ausführungsform durch das Kraftmittel unterscheidet. Wiederum werden daher die übrigen Bezugszeichen nicht erneut erläutert.

Das Kraftmittel ist in diesem Fall als ein Magnet 63 ausgebildet. Der Magnet 63 ist zusätzlich zum Elektromagneten 61 vorgesehen. Der Magnet 63 ist dazu ausgebildet, die Zusatzkraft auszuüben, die zumindest zur Rückhaltewirkung beiträgt. Die Zusatzkraft entspricht in dieser Ausführungsform einer magnetischen Anziehungskraft des Magneten 63. Der Magnet 63 kann dabei als ein Permanentmagnet oder als ein zusätzlicher Elektromagnet ausgebildet sein.

Fig. 5 zeigt eine perspektivische Teilansicht einer vierten Ausführungsform der Ballenwickelvorrichtung 1, welche sich von der zweiten Ausführungsform ebenfalls nur durch das Kraftmittel unterscheidet. Die übrigen Bezugszeichen werden aus diesem Grund nicht erneut erläutert.

In dieser Ausführungsform ist das Kraftmittel als eine mechanische Verriegelung 64 ausgebildet. Die Verrieglung 64 umfasst ein erstes Einrastelement 641 und ein zweites Einrastelement 642. Das erste Einrastelement 641 ist dazu ausgebildet, das zweite Einrastelement 642 aufzunehmen und durch ein Einrasten zu verriegeln. Durch die Einrastfunktion wird der Schaltarm 53 von der mechanischen Verriegelung 64 in der Grundposition gehalten.

Eine Entriegelung erfolgt durch Auseinanderziehen der Einrastelemente 641, 642, wobei wenigstens eines der Einrastelemente elastisch verformt wird. Die Verriegelung 64 ist dazu ausgebildet, dem Auseinanderziehen durch Ausübung einer Verriegelungskraft entgegenzuwirken, welche zur elastischen Verformung notwendig ist. Die Verriegelungskraft trägt zumindest zur Rückhaltewirkung bei. In dieser Ausführungsform entspricht die Zusatzkraft des Kraftmittels der Verriegelungskraft.

Wenngleich auch in den Fig. 3 - 5 jeweils immer nur eine einzelne Ausbildung des Kraftmittels dargestellt ist, kann als Kraftmittel eine Kombination von Feder 62, Magnet 62 und/oder Verriegelung 62 verwendet werden.

## Patentansprüche

1. Ballenwickelvorrichtung (1) zum Umwickeln eines Erntegutballens (2) mit einem Wickelmaterial (41), wobei die Ballenwickelvorrichtung (1) einen Rahmen (11) aufweist, mindestens eine um eine Wickelachse (W) in eine Rotationsrichtung (R) relativ zum Rahmen (11) rotierend antreibbare Wickeleinheit (4) zur Abgabe des Wickelmaterials (41) an den Erntegutballen (2), mindestens eine der Wickeleinheit (4) in Rotationsrichtung (R) vorauseilende Schalteinheit (5), die zur Erfassung eines Hindernisses vorgesehen ist, sowie eine Halteeinrichtung (6), die dazu eingerichtet ist, die Schalteinheit (5) in einer Grundposition zu halten, wobei die Schalteinheit (5) durch Überwinden einer Rückhaltewirkung der Halteeinrichtung (6) relativ zur Wickeleinheit (4) von der Grundposition in eine Auslöseposition auslenkbar ist, wodurch eine Sicherheitsmaßnahme der Ballenwickelvorrichtung (1) auslösbar ist,
**dadurch gekennzeichnet, dass**
die Halteeinrichtung (6) wenigstens einen Elektromagneten (61) aufweist, der dazu ausgebildet ist, die Rückhaltewirkung zumindest zu beeinflussen.

2. Ballenwickelvorrichtung (1) nach Anspruch 1, **dadurch gekennzeichnet, dass** der Elektromagnet (61) zur Erzeugung einer auf die Schalteinheit (5) relativ zur Wickeleinheit (4) wirkenden Elektromagnetkraft ausgebildet ist, welche veränderbar ist, um die Rückhaltewirkung zumindest zu beeinflussen.

3. Ballenwickelvorrichtung (1) nach einem der vorhergehenden Ansprüche, **dadurch gekennzeichnet, dass** die Halteeinrichtung (6) zusätzlich zu wenigstens einem Elektromagneten (61) ein Kraftmittel (62, 63, 64) umfasst, das zur Erzeugung einer auf die Schalteinheit (5) relativ zur Wickeleinheit (4) wirkenden Zusatzkraft ausgebildet ist, wobei die Zusatzkraft die Rückhaltewirkung zumindest beeinflusst.

4. Ballenwickelvorrichtung (1) nach einem der vorhergehenden Ansprüche, **dadurch gekennzeichnet, dass** die Zusatzkraft wenigstens anteilig in einer Kraftrichtung der Elektromagnetkraft des Elektromagneten (61) oder gegen die Kraftrichtung wirkend ausgerichtet ist.

5. Ballenwickelvorrichtung (1) nach einem der vorhergehenden Ansprüche, **dadurch gekennzeichnet, dass** der Einfluss des Kraftmittels (62, 63, 64) auf die Rückhaltewirkung unabhängig vom Einfluss des Elektromagneten (61) ist.

6. Ballenwickelvorrichtung (1) nach einem der vorhergehenden Ansprüche, **dadurch gekennzeichnet, dass** der Einfluss des Kraftmittels (62, 63, 64) auf die Rückhaltewirkung unabhängig von einem Betriebszustand der Ballenwickelvorrichtung (1) ist, und/oder das Kraftmittel (62, 63, 64) als passives Kraftmittel (62, 63, 64) ausgebildet ist.

7. Ballenwickelvorrichtung nach einem der vorhergehenden Ansprüche, **dadurch gekennzeichnet, dass** das Kraftmittel (62, 63, 64) wenigstens eine Feder (62), einen Magneten (63) und/oder eine mechanische Verriegelung (64) aufweist.

8. Ballenwickelvorrichtung (1) nach dem Oberbegriff des Anspruchs 1 oder nach einem der vorhergehenden Ansprüche,
**dadurch gekennzeichnet, dass**
die Ballenwickelvorrichtung (1) eine Stelleinrichtung (3) aufweist, die dazu eingerichtet ist, die Rückhaltewirkung in Abhängigkeit von einem Bewegungszustand des Rahmens (11) relativ zu einem Untergrund (8) automatisch einzustellen.

9. Ballenwickelvorrichtung (1) nach einem der vorhergehenden Ansprüche, **dadurch gekennzeichnet, dass** die Rückhaltewirkung in einem bewegten Zustand des Rahmens (11) gegenüber einem unbewegten Zustand des Rahmens (11) erhöht ist.

10. Ballenwickelvorrichtung (1) nach einem der vorhergehenden Ansprüche, **dadurch gekennzeichnet, dass** die Rückhaltewirkung unabhängig von der Grundposition der Schalteinheit (5) und/oder bei gleichbleibender Grundposition der Schalteinheit (5) einstellbar ist.

11. Ballenwickelvorrichtung (1) nach einem der vorhergehenden Ansprüche, **dadurch gekennzeichnet, dass** die Schalteinheit (5) einen um eine Schwenkachse (S) zwischen der Grundposition und der Auslöseposition verschwenkbaren Schaltarm (53) aufweist.

12. Ballenwickelvorrichtung (1) nach einem der vorhergehenden Ansprüche, **dadurch gekennzeichnet, dass** durch die Elektromagnetkraft und/oder die Zusatzkraft ein Rückhaltemoment um die Schwenkachse (S) eingeleitet wird, wobei das Rückhaltemoment dem Verschwenken des Schaltarms (53) von der Grundposition in die Auslöseposition entgegengerichtet wirkt.

13. Ballenwickelvorrichtung (1) nach einem der vorhergehenden Ansprüche, **dadurch gekennzeichnet, dass** die Ballenwickelvorrichtung (1) einen Sensor (51) aufweist, der dazu vorgesehen ist, eine Position des Schaltarms (53) relativ zum Wickelarm (42) zu erfassen, wobei die Sicherheitsmaßnahme in Abhängigkeit von der erfassten Position auslösbar ist.

14. Ballenwickelvorrichtung (1) nach einem der vorhergehenden Ansprüche, **dadurch gekennzeichnet, dass** die Sicherheitsmaßnahme zumindest dazu vorgesehen ist, die Wickeleinheit (4) wenigstens abzubremsen.

15. Verfahren zum Betreiben einer Ballenwickelvorrichtung (1) zum Umwickeln eines Erntegutballens (2) mit einem Wickelmaterial (41), wobei die Ballenwickelvorrichtung (1) einen Rahmen (11) aufweist, mindestens eine um eine Wickelachse (W) in eine Rotationsrichtung (R) relativ zum Rahmen (11) rotierend antreibbare Wickeleinheit (4) zur Abgabe des Wickelmaterials (41) an den Erntegutballen (2), mindestens eine der Wickeleinheit (4) in Rotationsrichtung (R) vorauseilende Schalteinheit (5), die zur Erfassung eines Hindernisses vorgesehen ist, sowie eine Halteeinrichtung (6), die dazu eingerichtet ist, die Schalteinheit (5) in einer Grundposition zu halten, wobei die Schalteinheit (5) durch Überwinden einer Rückhaltewirkung der Halteeinrichtung (6) relativ zur Wickeleinheit (4) von der Grundposition in eine Auslöseposition auslenkbar ist, wodurch eine Sicherheitsmaßnahme der Ballenwickelvorrichtung (1) auslösbar ist,
**dadurch gekennzeichnet, dass**
die Rückhaltewirkung in Abhängigkeit von einem Bewegungszustand des Rahmens (11) relativ zu einem Untergrund (8) automatisch eingestellt wird.
